# EUROPÄISCHE PATENTSCHRIFT

(11) **EP 2 112 373 B1**
(45) Veröffentlichungstag und Bekanntmachung des Hinweises auf die Patenterteilung: **04.11.2015**
(21) Anmeldenummer: 09005310.9
(22) Anmeldetag: 14.04.2009
(51) Int. Cl.: F03D 7/02

(54) **Verfahren zum Betreiben einer Windenergieanlage**
Method for operating a wind turbine
Procédé de contrôle du fonctionnement d'une éolienne

(30) Priorität: 22.04.2008 DE 102008020154
(43) Veröffentlichungstag der Anmeldung: 28.10.2009
(73) Patentinhaber: Senvion GmbH, 22297 Hamburg (DE)
(72) Erfinder: v. Mutius, Martin, 24358 Ascheffel (DE); Weitkamp, Roland, 49191 Belm (DE); Anemüller, Jochen, 49205 Hasbergen (DE)
(74) Vertreter: Glawe, Delfs, Moll

(56) Entgegenhaltungen:
- DE-A1- 10 011 393
- DE-A1-102005 034 899
- DE-A1-102006 034 106
- US-A- 5 289 041

## Beschreibung

Die Erfindung betrifft ein Verfahren zum Betreiben einer Windenergieanlage. Bei dem Verfahren wird ein Schräganströmungswert bestimmt, der die Abweichung zwischen der Windrichtung und der Richtung der Rotorachse der Windenergieanlage repräsentiert. Überschreitet der Schräganströmungswert einen vorgegebenen Grenzwert, so wird die Rotordrehzahl der Windenergieanlage vermindert. Die Erfindung betrifft ferner eine Anordnung zum Durchführen des Verfahrens. Die Anordnung umfasst eine Windenergieanlage und einen Windrichtungsmesser, wobei eine Steuereinheit vorgesehen ist, die die Rotordrehzahl der Windenergieanlage vermindert, wenn die mit dem Windrichtungsmesser festgestellte Schräganströmung einen vorgegebenen Grenzwert überschreitet.

Für den Betrieb von Windenergieanlagen ist es am besten, wenn die Windverhältnisse konstant sind und der Wind möglichst parallel zur Rotorachse auf die Windenergieanlage trifft. In der Praxis sind solche idealen Bedingungen häufig nicht gegeben, sondern es muss mit laufenden Änderungen der Windverhältnisse umgegangen werden. Eine besonders große Belastung stellt es für Windenergieanlagen erfahrungsgemäß dar, wenn der Wind schräg auf die Windenergieanlage trifft. Die Rotorblätter sind dann während eines Umlaufs je nach Winkelposition unterschiedlichen Lasten ausgesetzt. Dies verursacht Vibrationen, die sich von den Rotorblättern über die Rotorachse bis in das Fundament der Windenergieanlage übertragen können.

Aus der DE 10 2006 034 106 A1 ist ein Verfahren bekannt, bei dem die Rotordrehzahl vermindert wird, wenn der Winkel der Schräganströmung, also der Winkel zwischen der momentanen Windrichtung und der Rotorachse zu groß wird. Zwar kann dieses Verfahren grundsätzlich dazu beitragen, die Belastung der Windenergieanlage zu reduzieren. Wegen des sehr einfachen Kriteriums, von dem die Verminderung der Drehzahl abhängig gemacht wird, wird jedoch die Rotordrehzahl vielfach auch dann vermindert, wenn die Windenergieanlage tatsächlich gar keiner besonderen Belastung ausgesetzt ist. Dies führt zu unnötigen Ertragsausfällen.

Ausgehend vom eingangs genannten Stand der Technik liegt der Erfindung die Aufgabe zu Grunde, ein Verfahren und eine Anordnung vorzustellen, mit denen die durch eine Schräganströmung verursachte Belastung von Windenergieanlagen zielgenau vermindert werden kann. Die Aufgabe wird gelöst durch die Merkmale der unabhängigen Ansprüche. Vorteilhafte Ausführungsformen finden sich in den Unteransprüchen.

Erfindungsgemäß wird bei dem Verfahren außer dem Schräganströmungswert, der die Abweichung zwischen der Windrichtung und der Richtung der Rotorachse der Windenergieanlage repräsentiert, ein Belastungswert bestimmt, der den Belastungszustand der Windenergieanlage repräsentiert. Anhand eines funktionalen Zusammenhangs wird aus dem Belastungswert und dem Schräganströmungswert ein Gesamtlastwert berechnet. Der funktionale Zusammenhang ist derart, dass sich der Gesamtlastwert in Abhängigkeit von dem Belastungswert und in Abhängigkeit von dem Schräganströmungswert mononton ändert. Die Rotordrehzahl der Windenergieanlage wird vermindert, nachdem der Gesamtlastwert einen ersten Grenzwert überschritten hat. Die Windenergieanlage wird abgeschaltet, wenn der Gesamtlastwert oberhalb des ersten Grenzwerts liegt und zusätzlich ein zweiter von der Gesamtbelastung der Windenergieanlage abhängiger Grenzwert überschritten ist. Das Vermindern der Rotordrehzahl und das Abschalten der Windenergieanlage können unmittelbar erfolgen, wenn der erste bzw. zweite Grenzwert überschritten werden. Alternativ kann vorgesehen sein, dass der erste bzw. zweite Grenzwert für eine vorbestimmte Zeitspanne überschritten sein müssen, bevor die Drehzahl vermindert wird oder die Windenergieanlage abgeschaltet wird.

Zunächst werden einige Begriffe erläutert. Von einer Schräganströmung spricht man, wenn die Windrichtung in horizontaler und/oder in vertikaler Richtung von der Richtung der Rotorachse abweicht. Der Schräganströmungswert basiert auf einem oder mehreren Messwerten der Windrichtung. Im einfachsten Fall entspricht der Schräganströmungswert dem Winkel zwischen der momentan gemessenen Windrichtung und der Rotorachse. Der Schräganströmungswert kann auch auf der Basis einer Mehrzahl von Messwerten bestimmt werden, beispielsweise durch örtliche oder zeitliche Mittelwertbildung. Es können einfache Mittelungen, gleitende Mittelungen oder auch nicht-lineare Mittelungen vorgesehen sein. Bei der nicht-linearen Mittelung können Messwerte, die auf eine sehr starke Abweichung zwischen der Windrichtung und der Richtung der Rotorachse hinweisen, überproportional, beispielsweise quadratisch, kubisch oder exponentiell, in die Mittelung eingehen. Ferner kann in dem Schräganströmungswert berücksichtigt sein, mit welcher Winkelgeschwindigkeit sich die Windrichtung ändert. Es ist unerheblich, auf welche Weise der Messwert der Windrichtung gewonnen wird. Der Messwert kann auf der Stellung einer Windfahne beruhen.

Möglich ist es auch, aus Messwerten benachbarter Windenergieanlagen Informationen über die Windrichtung zu gewinnen. Eine andere Möglichkeit besteht darin, ein längliches, mit einer gewissen Elastizität versehenes Element dem Wind auszusetzen und zu messen, in welche Richtung sich das Element biegt. Die Windrichtung kann auch mithilfe von Ultraschallanemometern bestimmt werden.

Die Belastung, unter der eine Windenergieanlage steht, spiegelt sich in verschiedenen Werten wider, die an einer Windenergieanlage aufgenommen werden können. So steigt etwa die Belastung einer Windenergieanlage mit steigender Rotordrehzahl oder mit steigender Generatorleistung. Eine besondere Belastung der Windenergieanlage kann sich auch dadurch äußern, dass Betriebsparameter der Windenergieanlage außerhalb des vorgesehenen Bereichs liegen. Ferner kann sich die Belastung der Windenergieanlage auch in einer Belastung, Beanspruchung oder Verformung der Rotorblätter, in einer Belastung, Beanspruchung, Verformung oder Vibration von Komponenten der Windenergieanlage, im Pitchwinkel der Rotorblätter oder Beschleunigungen des Turmkopfes widerspiegeln. Denkbar ist es auch, die Belastung einer Windenergieanlage indirekt zu bestimmen, etwa indem aus der Windstärke auf die Belastung der Windenergieanlage geschlossen wird. Allerdings ist es in der Praxis schwierig, die Windgeschwindigkeit exakt zu messen. Der erfindungsgemäß zu bestimmende Belastungswert beruht auf Messwerten, die die Belastung der Windenergieanlage wiedergeben. In den Belastungswert können Messwerte einer oder mehrerer Zustände oder Eigenschaften der Windenergieanlage eingehen.

Der funktionale Zusammenhang zwischen Gesamtlastwert, Schräganströmungswert und Belastungswert wird dann als monoton bezeichnet, wenn der Gesamtlastwert einer Änderung in derselben Richtung unterliegt, wenn der Schräganströmungswert einen Anstieg der Schräganströmung wiedergibt und wenn der Belastungswert einen Anstieg der Belastung der Windenergieanlage wiedergibt. Im einfachsten Fall sind der der Schräganströmungswert und der Belastungswert so definiert, dass sie größere Werte annehmen, wenn die Schräganströmung bzw. die Belastung ansteigen. Der monotone funktionale Zusammenhang kann dann derart sein, dass der Gesamtlastwert sowohl mit wachsendem Schräganströmungswert als auch mit wachsendem Belastungwert ansteigt, dass also die Steigung der Funktion in Abhängigkeit von beiden Variablen überall größer gleich null ist. Ohne an der technischen Wirkung etwas zu ändern, kann der funktionale Zusammenhang auch derart sein, dass der Gesamtlastwert mit wachsender Schräganströmung und wachsender Belastung monoton fällt. Ferner ist es ohne Änderung der technischen Wirkung möglich, den Schräganströmungswert und/oder den Belastungswert so zu definieren, dass sie mit wachsender Schräganströmung bzw. mit wachsender Belastung der Windenergieanlage kleiner werden.

Die Formulierung, dass "ein zweiter von der Gesamtbelastung der Windenergieanlage direkt oder indirekt abhängiger Grenzwert überschritten ist", betrifft genau zwei Fälle, die technisch gleichwertig sind. Im ersten Fall wird die Windenergieanlage abgeschaltet, nachdem der Gesamtlastwert einen zweiten Grenzwert überschritten hat, wobei der zweite Grenzwert einer größeren Gesamtbelastung der Windenergieanlage entspricht als der erste Grenzwert. Im zweiten Fall wird die Windenergieanlage abgeschaltet nachdem ein als Folge der Drehzahlverminderung veränderter Parameter der Windenergieanlage einen vorgegebenen Grenzwert überschritten hat. Wenn nach dem Überschreiten des ersten Grenzwerts die durch den Gesamtlastwert repräsentierte Gesamtbelastung weiter steigt, so wird eine Maßnahme ergriffen, um die Gesamtbelastung zu reduzieren. Beispielsweise kann die Drehzahlreduzierung proportional zum Schräganströmungswert und/oder proportional zum Belastungswert und/oder proportional zum Gesamtlastwert erfolgen. Diese Maßnahme hat wiederum zur Folge, dass der Parameter sich ändert. Überschreitet der Parameter nun einen vorgegebenen Grenzwert, so wird die Anlage abgeschaltet. Dieses Abschaltkriterium tritt nur dann ein, wenn zugleich der Gesamtlastwert einen Wert hat, den man als Abschaltkriterium verwenden könnte. Formal hängt das Abschalten jedoch nicht unmittelbar vom Gesamtlastwert ab. Wird beispielsweise in Folge eines weiteren Anstieg der Gesamtbelastung jenseits des ersten Grenzwerts die Rotordrehzahl vermindert, so kann als Abschaltkriterium das Unterschreiten einer Drehzahluntergrenze herangezogen werden. Auch das Unterschreiten einer Leistungsuntergrenze und ähnliches kommen in Betracht.

Bei dem erfinderischen Verfahren sind mehrere Aspekte miteinander verknüpft. Indem anhand des Gesamtlastwerts auf der Basis Schräganströmungswerts und des Belastungswerts eine Abschätzung gemacht wird, welcher tatsächlichen Belastung die Windenergieanlage ausgesetzt ist, wird die Entscheidung über die Verminderung der Rotordrehzahl von einem Kriterium abhängig gemacht, das sehr nahe an dem liegt, was beeinflusst werden soll, nämlich der Gesamtbelastung der Windenergieanlage. Anders als im Stand der Technik hängt die Verminderung der Rotordrehzahl nicht mehr allein von einem Kriterium ab, das zwar ein Indikator für die Gesamtbelastung der Windenergieanlage ist, das aber zu häufig auch dann zu einer Verminderung der Rotordrehzahl führt, wenn die Gesamtbelastung der Windenergieanlage noch in einem akzeptablen Bereich liegt. Das erfindungsgemäße Verfahren ermöglicht es dadurch, die Maßnahme Verminderung der Rotordrehzahl zielgenauer einzusetzen, als es im Stand der Technik möglich war.

Die Erfindung hat ferner erkannt, dass durch Schräganströmung Belastungsspitzen in der Windenergieanlage hervorgerufen werden können, die einen außerordentlich negativen Einfluss auf die Lebensdauer der Windenergieanlage und ihrer Komponenten haben können. Belastungsspitzen treten etwa dann auf, wenn die Windenergieanlage bei Nennleistung oder knapp unterhalb der Nennleistung betrieben wird und der Wind plötzlich auf eine andere Richtung springt, so dass der Rotor unter einem Winkel von beispielsweise 45° angeströmt wird. Besonders kritisch ist es, wenn die Windrichtungsänderung mit einer Zunahme der Windgeschwindigkeit (Böe) verbunden ist. Eine solche Situation belastet die Windenergieanlage so stark, dass sie nicht einmal kurzfristig akzeptiert werden kann. Anhand der erfindungsgemäß bestimmten Gesamtbelastung der Windenergieanlage können solche Belastungsspitzen erkannt werden und die Windenergieanlage kann ausgeschaltet werden. Zwar führt auch dies zu einem Ertragsausfall, der dadurch verursachte Verlust ist jedoch klein im Vergleich zu dem Verlust, der mit einer verkürzten Lebensdauer der Windenergieanlage verbunden wäre. Auch in dieser Situation kann also zielgenauer auf Schräganströmungen reagiert werden als im Stand der Technik.

Im Stand der Technik ist zwar bereits der Vorschlag gemacht worden, eine Windenergieanlage bei starker Schräganströmung abzuschalten (US 2006/0002791 A1). Mit der erfindungsgemäßen Aufgabe, zielgenau auf Schräganströmungen reagieren zu können, hat die US 2006/000279 A1 jedoch nichts zu tun, weil es gerade an dem Gedanken fehlt, auf unterschiedliche Belastungssituationen unterschiedlich zu reagieren.

Insbesondere ermöglicht die Erfindung, die Gesamtbelastung einer Windenergieanlage im besonders kritischen Bereich der Nennwindgeschwindigkeit, d.h. der Windgeschwindigkeit, bei der die Windenergieanlage gerade die Nennleistung erreicht, sehr genau zu erfassen und bei starker Schräganströmung so zu betreiben, dass unzulässige Belastungen sicher vermieden werden, gleichzeitig der Energieertrag aber maximiert wird, d.h. insbesondere im Bereich der Nennwindgeschwindigkeit kann die Windenergieanlage dicht an ihren zulässigen Belastungsgrenzen betrieben werden. Dieses war mit den vorbekannten Verfahren nicht möglich.

In einem einfachen Fall des erfindungsgemäßen Verfahrens wird der Belastungswert gleich 0 gesetzt, wenn der dem Belastungswert zu Grunde liegende Messwert (beispielsweise die Rotordrehzahl) unterhalb eines vorgegebenen Wert liegt (beispielsweise halbe Nenndrehzahl), und wird der Belastungswert gleich 1 gesetzt, wenn der Messwert oberhalb des vorgegebenen Werts liegt. Entsprechend ist der Schräganströmungswert gleich 0, wenn der zu Grunde liegende Messwert (beispielsweise der Winkel zwischen der momentanen Windrichtung und der Rotorachse) unterhalb eines ersten vorgegebenen Werts (beispielsweise 30°) liegt, gleich 1, wenn der Messwert oberhalb des ersten vorgegebenen Werts liegt, und gleich 2, wenn der Messwert oberhalb eines zweiten vorgegebenen Werts (beispielsweise 45°) liegt. Der Gesamtlastwert kann dann durch Multiplikation des Belastungswerts mit dem Schräganströmungswert berechnet werden und die Rotordrehzahl wird vermindert, wenn der Gesamtlastwert größer gleich 1 ist, und die Windenergieanlage wird abgeschaltet, wenn der Gesamtlastwert größer gleich 2 ist. Die Werte 0, 1, 2 dienen lediglich der Veranschaulichung, dieselbe technische Wirkung kann mit beliebigen anderen Zahlen erreicht werden, wobei die Zahlen auch in einem anderen Größenverhältnis zueinander stehen können. In dieser Ausführungsform ist die technische Wirkung des erfindungsgemäßen Verfahrens vergleichbar mit einem Verfahren, bei dem mehrere logische Abfragen miteinander kombiniert werden. Ein eigener unabhängiger Anspruch macht deutlich, dass auch diese Ausführungsform vom Schutzgegenstand umfasst ist.

Der Schräganströmungswert kann alternativ auf der Basis mehrerer die Windrichtung repräsentierender Größen bestimmt werden. Eine erste Größe (beispielsweise normale Mittelung der Windrichtungsmesswerte) ist charakteristisch für Belastungszustände, denen mit einer Verringerung der Rotordrehzahl entgegengewirkt werden kann. Eine zweite Größe (beispielsweise quadratische Mittelung der Windrichtungsmesswerte) ist charakteristisch für Belastungszustände, bei denen die Windenergieanlage abgeschaltet werden sollte. Der Schräganströmungswert wird gleich 1 gesetzt, wenn die erste Größe einen ersten vorgegebenen Grenzwert überschreitet, und wird gleich 2 gesetzt, wenn die zweite Größe einen zweiten vorgegebenen Grenzwert überschreitet. Es ist nicht erforderlich, dass der zweite vorgegebene Grenzwert größer ist als der erste vorgegebene Grenzwert. Der zweite vorgegebene Grenzwert kann auch kleiner oder gleich dem ersten vorgegebenen Grenzwert sein. In seiner technischen Wirkung ist auch dieses Verfahren ähnlich zu einer Kombination mehrerer logischer Abfragen. Durch einen eigenen unabhängigen Anspruch wird deutlich gemacht, dass diese Ausführungsform vom Schutzgegenstand umfasst ist.

Stärker als bei den vorstehenden Beispielen kommen die Vorzüge des erfindungsgemäßen Verfahrens jedoch zur Geltung, wenn der Schräganströmungswert und der Belastungswert nicht lediglich das Überschreiten einzelner Grenzwerte wiedergeben, sondern wenn sie dergestalt bestimmt werden, dass ihr Wert jeweils desto größer ist, je größer der jeweilige Beitrag zur Gesamtbelastung der Windenergieanlage ist. Der Gesamtlastwert gibt dann ein exakteres Bild über die Gesamtbelastung, unter der die Windenergieanlage steht.

Wird der Belastungswert auf der Basis von beispielsweise der Rotordrehzahl oder der Generatorleistung bestimmt, so ist der Belastungswert lediglich ein allgemeiner Indikator für die Grundbelastung der Windenergieanlage. Ist die Grundbelastung hoch und ergibt sich aus dem Schräganströmungswert zusätzlich, dass die Windenergieanlage schräg angeströmt wird, so ist die Windenergieanlage einer Gesamtbelastung ausgesetzt, die eine Verminderung der Rotordrehzahl oder ein Abschalten der Windenergieanlage erforderlich macht. Führt man das erfindungsgemäße Verfahren auf diese Weise durch, so ist man darauf angewiesen, dass der Schräganströmungswert ein exakter Indikator dafür ist, dass die Windenergieanlage tatsächlich schräg angeströmt wird. Es zeigt sich jedoch, dass dies in vielen Fällen nicht der Fall ist. Misst man die Windrichtung mit einer auf der Windenergieanlage angebrachten Windfahne, so können sehr kleine und lokal begrenzte Luftverwirbelungen dazu führen, dass die Windfahne große Schräganströmungswinkel anzeigt. Basiert der Schräganströmungswert auf den Windrichtungsmesswerten der Windfahne, so indiziert er in einer solchen Situation eine starke Schräganströmung, obwohl der Rotor insgesamt gar keiner Schräganströmung ausgesetzt ist. Der Gesamtlastwert wird so groß, dass die Rotordrehzahl vermindert oder die Windenergieanlage abgeschaltet wird, obwohl die Windenergieanlage tatsächlich lediglich der Grundbelastung ausgesetzt ist. Dies führt zu unnötigen Ertragsausfällen.

Die Aussagekraft des Gesamtlastwerts kann verbessert werden, wenn der Belastungswert derart bestimmt wird, dass er zugleich ein Indikator dafür ist, dass die Windenergieanlage einer Schräganströmung ausgesetzt ist. Dies wird beispielsweise erreicht, wenn der Belastungswert anhand einer Beanspruchung von Komponenten der Windenergieanlage bestimmt wird. Der Begriff Beanspruchung bezeichnet eine Dehnung, Spannung oder Verformung im Material, die durch eine von außen auf das Material einwirkende Kraft hervorgerufen ist. Die Beanspruchung kann zyklisch sein und sich in Form einer Vibration äußern. Zwar können Beanspruchungen in den Komponenten einer Windenergieanlage auch andere Ursachen haben, es hat sich aber gezeigt, dass Beanspruchungen häufig in Zusammenhang mit einer Schräganströmung stehen. Sind nun sowohl der auf einer Beanspruchung basierende Belastungswert als auch der Schräganströmungswert groß, so ist der daraus resultierende große Gesamtlastwert ein starker Indikator, dass die Windenergieanlage tatsächlich einer starken Gesamtbelastung durch Schräganströmung ausgesetzt ist.

Es gibt Beanspruchungen, die mit besonders hoher Wahrscheinlichkeit im Zusammenhang mit einer Schräganströmung stehen können. Dies gilt beispielsweise für Beanspruchungen, bei denen sich die Rotorblätter während eines Umlaufs in bestimmten Winkelpositionen stärker biegen als in anderen Winkelpositionen. Die Biegung der Rotorblätter kann beispielsweise mittels Dehnungsstreifen gemessen werden und der Belastungswert kann aus den Messwerten der Dehnungsstreifen bestimmt werden.

Zeigt der Gesamtlastwert eine Situation an, in der die Windenergieanlage einer großen Gesamtbelastung durch Schräganströmung ausgesetzt ist und in der zugleich die Rotorblätter in bestimmten Winkelpositionen stärker gebogen sind als in anderen Winkelpositionen, so ist es möglich, die Gesamtbelastung der Windenergieanlage durch zyklisches Pitchen weiter zu reduzieren. Beim zyklischen Pitchen werden die Rotorblätter zur Verminderung der Belastung periodisch gepitcht, wobei die Periode des Pitchens der Drehzahl des Rotors entspricht.

Ein weiterer Beitrag zur Verminderung der Belastung der Windenergieanlage kann geleistet werden, indem die Windenergieanlage neu ausgerichtet wird, so dass sich die Differenz zwischen der Windrichtung und der Rotorachse vermindert. Ist die Windenergieanlage abgeschaltet worden, nachdem der Gesamtlastwert den zweiten Grenzwert überschritten hat, sollte unmittelbar nach dem Abschalten mit der Neuausrichtung begonnen werden. Ist lediglich die Rotordrehzahl vermindert worden, kann zunächst für eine kurze Zeitspanne abgewartet werden, ob der Wind zurückdreht, bevor die Windenergieanlage neu ausgerichtet wird. Alternativ kann mit der Ausrichtung auch unmittelbar begonnen werden, wenn der Gesamtlastwert den ersten Grenzwert überschreitet. Auch ohne Überschreitung eines Grenzwerts kann anhand des Gesamtlastwerts darüber entschieden werden, ob die Windenergieanlage neu ausgerichtet wird.

Einer besonderen Belastung ist die Windenergieanlage ausgesetzt, wenn die Windrichtung sich ändert und gleichzeitig die Windstärke steigt. Da eine steigende Windstärke zu einem kurzfristigen Anstieg der Rotordrehzahl führt, kann dieser Fall berücksichtigt werden, in dem der Belastungswert auf der Basis einer Zunahme der Rotordrehzahl bestimmt wird. Wird die Drehzahl bei Nennleistung durch die Steuerung konstant gehalten, kann der Belastungswert anstatt dessen beispielsweise auf der Basis einer Zunahme des Drehmoments oder einer anderen Beanspruchung bestimmt werden.

Überschreitet der Gesamtlastwert den ersten Grenzwert, so kann die durch das erfindungsgemäße Verfahren vorgegebene Reaktion darin bestehen, dass die Rotordrehzahl um einen festen Betrag reduziert wird. Beispielsweise kann die Rotordrehzahl von 100% der Nenndrehzahl auf 90% der Nenndrehzahl reduziert werden. Alternativ kann die Rotordrehzahl kontinuierlich oder in mehreren Stufen vermindert werden, so dass sie desto stärker unter der Nenndrehzahl liegt, je stärker der Gesamtlastwert den ersten Grenzwert überschreitet. Wird anschließend auch der zweite Grenzwert überschritten, so kann ein direktes Abschaltsignal ausgelöst werden, das ein Abschalten der Windenergieanlage bewirkt. Ebenfalls möglich ist es, die Rotordrehzahl so abzusenken, dass sie eine Drehzahluntergrenze unterschreitet, wenn der Gesamtlastwert den zweiten Grenzwert überschreitet. Beim Unterschreiten der Drehzahluntergrenze wird die Windenergieanlage abgeschaltet. Das Unterschreiten der Drehzahluntergrenze ist also ein indirekt mit dem zweiten Grenzwert verknüpftes Abschaltsignal.

Zusätzlich zu der Rotordrehzahl kann auch die Generatorleistung vermindert werden, wenn der Gesamtlastwert den ersten Grenzwert überschreitet. Es kommt eine Verminderung um einen festen Betrag, beispielsweise von 100% der Nennleistung auf 85% der Nennleistung, in Betracht. Alternativ kann die Generatorleistung kontinuierlich oder in mehreren Stufen vermindert werden, je stärker der Gesamtlastwert den ersten Grenzwert überschreitet. Um zu abrupte Änderungen im Betrieb der Windenergieanlage zu vermeiden, erfolgt die Verminderung der Drehzahl bzw. der Leistung bevorzugt durch rampenförmige Sollwertreduzierungen, d.h., dass z.B. der Drehzahlsollwert über eine vorbestimmte Rampenzeit, z.B. 5s, von 100% auf 90% oder 80% reduziert wird.

Um den Ertragsausfall gering zu halten, ist es erstrebenswert, die Zeitspannen, in denen die Windenergieanlage mit verminderter Drehzahl betrieben wird, möglichst kurz zu halten. Denkbar ist es, die Rotordrehzahl sofort wieder zu erhöhen, wenn der Gesamtlastwert unter den ersten Grenzwert sinkt. Bei unregelmäßigen Winden kann dies jedoch dazu führen, dass die Rotordrehzahl permanent hoch- und runtergefahren wird. Vorzugsweise wird die Drehzahlverminderung deswegen erst dann rückgängig gemacht, wenn der Gesamtlastwert für eine vorbestimmte Zeitdauer, insbesondere von 20 Sekunden, vorzugsweise von 10 Sekunden, weiter vorzugsweise von 5 Sekunden unterhalb des ersten Grenzwerts liegt. Alternativ kann die Drehzahlverminderung auch dann rückgängig gemacht werden, wenn der Gesamtlastwert um einen vorbestimmten Betrag unterhalb des ersten Grenzwerts liegt (Hysterese). Ist der Wind sehr unregelmäßig kann es vorzuziehen sein, die Windenergieanlage auch über einen längeren Zeitraum mit verminderter Rotordrehzahl zu betreiben. Dies kann beispielsweise so erfolgen, dass in einem vorbestimmten Zeitraum nur eine gewisse Anzahl von Drehzahlverminderungen wieder rückgängig gemacht werden können, z.B. max. 10 Drehzahlverminderungen in 120 min, ansonsten verbleibt die Windenergieanlage für weitere 120 min in der Drehzahlverminderung.

Die erfindungsgemäße Anordnung umfasst eine erste Auswerteeinheit zum Ermitteln eines Schräganströmungswerts aus Messwerten des Windrichtungsmessers und eine zweite Auswerteeinheit zum Ermitteln eines Belastungswerts aus Messwerten des Belastungssensor. Ferner ist ein Rechenmodul vorgesehen, das einen Gesamtlastwert aus dem Belastungswert und dem Schräganströmungswert berechnet. Das Rechenmodul nutzt einen funktionalen Zusammenhang aus, gemäß dem sich der Gesamtlastwert (G) in Abhängigkeit von dem Belastungswert (B) und in Abhängigkeit von dem Schräganströmungswert (S) monoton ändert Schließlich umfasst die Anordnung eine Steuereinheit, die die Rotordrehzahl der Windenergieanlage vermindert, wenn der Gesamtlastwert oberhalb eines ersten Grenzwert liegt, und die die Windenergieanlage abschaltet, wenn zusätzlich ein zweiter von der Gesamtbelastung abhängiger Grenzwert überschritten ist.

Der Belastungssensor kann ein Sensor für die Rotordrehzahl oder ein Sensor für die Generatorleistung sein. Der Belastungssensor kann auch ein Sensor für die Belastung, Beanspruchung und/oder Biegung der Rotorblätter, ein Sensor für Beschleunigungen oder ein Sensor für Vibrationen sein. Der Belastungssensor kann auch ein Sensor für die Belastung, Beanspruchung oder Verformung von Turm, Rotorwelle, Rotorblatt oder einer sonstigen Komponente der Windenergieanlage sein.

Der Windrichtungsmesser kann eine Windfahne oder ein Ultraschallanemometer sein, die auf der Windenergieanlage oder an anderer Stelle angeordnet sein können. Insbesondere können die Windrichtungsmesswerte von einer anderen Windenergieanlage stammen. Vorzugsweise steht die andere Windenergieanlage in Windrichtung gesehen vor der Windenergieanlage der erfindungsgemäßen Anordnung. Die Windrichtungsmesser können so ausgelegt sein, dass sie außer der horizontalen Windrichtung auch die vertikale Windrichtung feststellen können, beispielsweise durch eine seitlich an der Gondel angebrachte Windfahne mit horizontaler Drehachse.

Die Steuereinheit kann so ausgelegt sein, dass sie unmittelbar die Rotordrehzahl vermindert bzw. die Anlage abschaltet, wenn der erste bzw. zweite Grenzwert überschritten wird. Alternativ kann die Steuereinheit so ausgelegt sein, dass zunächst eine vorgegebene Zeitspanne abgewartet wird. Zum Messen der Zeitspanne kann ein konventioneller Zähler oder ein Up-/Down-Counter vorgesehen sein.

Die Erfindung wird nachfolgend unter Bezugnahme auf die beigefügten Zeichnungen anhand vorteilhafter Ausführungsformen beispielhaft beschrieben. Es zeigen:
- Fig. 1: eine erfindungsgemäße Anordnung;
- Fig. 2: eine schematische Darstellung von Elementen der Windenergieanlage der Fig. 1; und
- Fig. 3-5: Beispiele für die Bestimmung von Schräganströmungswerten und Belastungswerten.

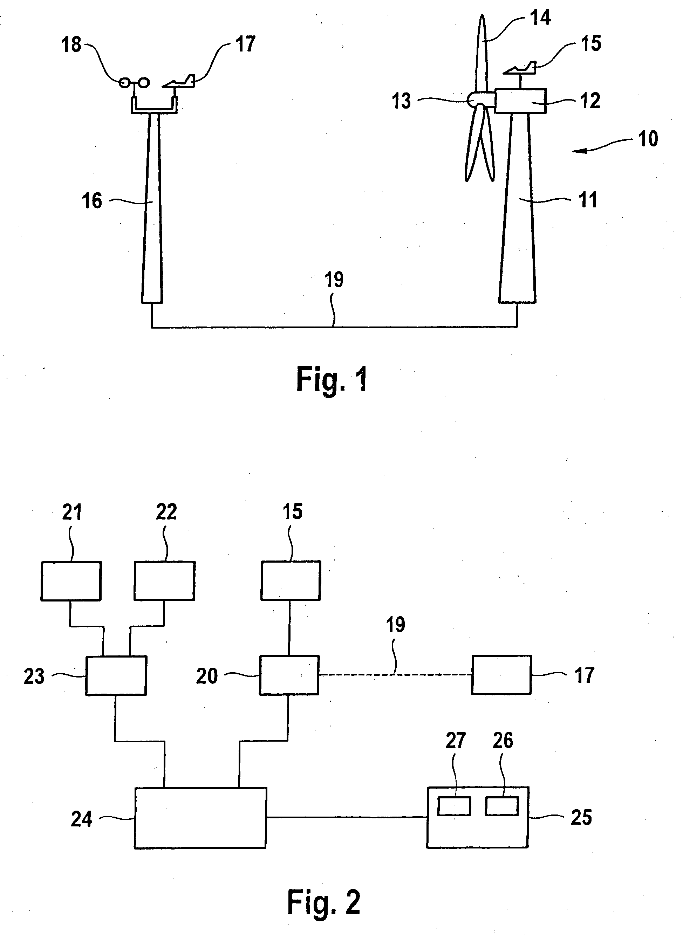

Eine Windenergieanlage 10 in Fig. 1 umfasst eine auf einem Turm 11 angeordnete Gondel 12 mit einem Rotor 13. Der Rotor 13 umfasst drei Rotorblätter 14, deren Pitch einstellbar ist, um die Drehzahl des Rotors 13 zu regeln. Auf der Gondel 12 ist ein Windrichtungsmesser in Form einer Windfahne 15 sowie ggf. ein nicht dargestellter Windstärkemesser in Form eines Anemometers angebracht.

Vor der Windenergieanlage 10 ist ein Mast 16 errichtet, auf dessen Spitze sich eine weitere Windfahne 17 sowie ein Windstärkemesser 18 angeordnet sind. Die Messwerte des Windrichtungsmessers 17 und des Windstärkemessers 18 werden aufgenommen und über ein Kabel 19 an die Windenergieanlage 10 übermittelt. Alternativ zum Messmast bieten sich auch bodengestützte Geräte an, die die Windgeschwindigkeit in Nabenhöhe messen können(z.B. Lidar oder Sodar).

Gemäß Fig. 2 ist in der Windenergieanlage 10 eine Auswerteeinheit 20 angeordnet, die aus den Messwerten der Windfahnen 15 und 17 einen Schräganströmungswert ermittelt. Dazu ermittelt die Auswerteeinheit 20 zunächst einen Mittelwert zwischen den Windrichtungsmesswerten der Windfahne 15 und der Windfahne 17 und ordnet dem so gewonnenen Mittelwert einen Schräganströmungswert S zu.

Die Windenergieanlage 10 umfasst ferner zwei Belastungssensoren 21, 22, die Messwerte über die momentane Belastung der Windenergieanlage 10 aufnehmen. Beispielsweise kann der Belastungssensor 21 ein Sensor für die Rotordrehzahl und der Belastungssensor 22 ein Sensor für die Biegung der Rotorblätter 14 sein. Die Messwerte der Belastungssensoren 21, 22 werden an eine zweite Auswerteeinheit 23 geleitet. Die Auswerteeinheit 23 führt die Messwerte der Belastungssensoren 21, 22 zusammen und ordnet ihnen einen Belastungswert B zu.

Der in der Auswerteeinheit 20 bestimmte Schräganströmungswert S und der in der Auswerteeinheit 23 bestimmte Belastungswert B werden an ein Rechenmodul 24 geleitet. Das Rechenmodul 24 berechnet aus dem Schräganströmungswert S und dem Belastungswert B anhand eines funktionalen Zusammenhangs einen Gesamtlastwert G. Der funktionale Zusammenhang ist in diesem Fall eine Multiplikation, so dass der Gesamtlastwert G gleich dem Produkt aus dem Schräganströmungswert S und dem Belastungswert B ist.

Der Gesamtlastwert G wird an eine Steuereinheit 25 der Windenergieanlage 10 weitergeleitet. Die Steuereinheit 25 umfasst einen Zähler 26 und ein Vergleichsmodul 27. In dem Vergleichsmodul 27 wird der Gesamtlastwert G permanent mit einem ersten vorgegebenen Grenzwert und einem zweiten vorgegebenen Grenzwert verglichen. Der Zähler 26 stellt die Zeitdauer fest, für die der Gesamtlastwert G oberhalb des ersten bzw. oberhalb des zweiten Grenzwert liegt.

Die beschriebene Anordnung kann beispielsweise dazu benutzt werden, den Schräganströmungswert S und den Belastungswert B derart zu bestimmen, dass der Gesamtlastwert G dann größer ist als der erste Grenzwert, wenn die Windenergieanlage bei Nenndrehzahl läuft und wenn der Wind den Rotor 13 unter einem Winkel α von mehr als 30° anströmt. Wird in der Steuereinheit 25 festgestellt, dass dieser Zustand für mehr als 15 Sekunden vorliegt, so reduziert die Steuereinheit 25 die Drehzahl der Windenergieanlage auf 90% der Nenndrehzahl. Der Gesamtlastwert G überschreitet den zweiten vorgegebenen Grenzwert, wenn die Windenergieanlage 10 bei Nenndrehzahl läuft und der Wind den Rotor 13 unter einem Winkel α von mehr als 60° anströmt. Wird in der Steuereinheit 25 festgestellt, dass dieser Zustand für mehr als 2 Sekunden vorliegt, gibt die Steuereinheit 25 den Befehl, die Windenergieanlage abzuschalten.

Alternativ kann der Gesamtlastwert G derart bestimmt werden, dass der erste Grenzwert überschritten wird, wenn der Schräganströmungswinkel α größer ist als 30° und der Belastungssensor 21 meldet, dass die Rotordrehzahl über einen Zeitraum von mehr als 3 Sekunden angestiegen ist. Wiederum löst dies in der Steuereinheit 25 den Befehl aus, die Rotordrehzahl auf 90% der Nenndrehzahl zu reduzieren. Hat sich die Windenergieanlage auf die neue Rotordrehzahl eingestellt, wird mit der Windnachführung begonnen, es wird also die Windenergieanlage 10 auf die neue Windrichtung ausgerichtet.

Stellt der Zähler 26 in der Steuereinheit 25 anschließend fest, dass der Gesamtlastwert G wieder für 5 Sekunden unter dem ersten Grenzwert liegt, gibt die Steuereinheit 25 den Befehl, die Rotordrehzahl wieder auf Nenndrehzahl zu erhöhen.

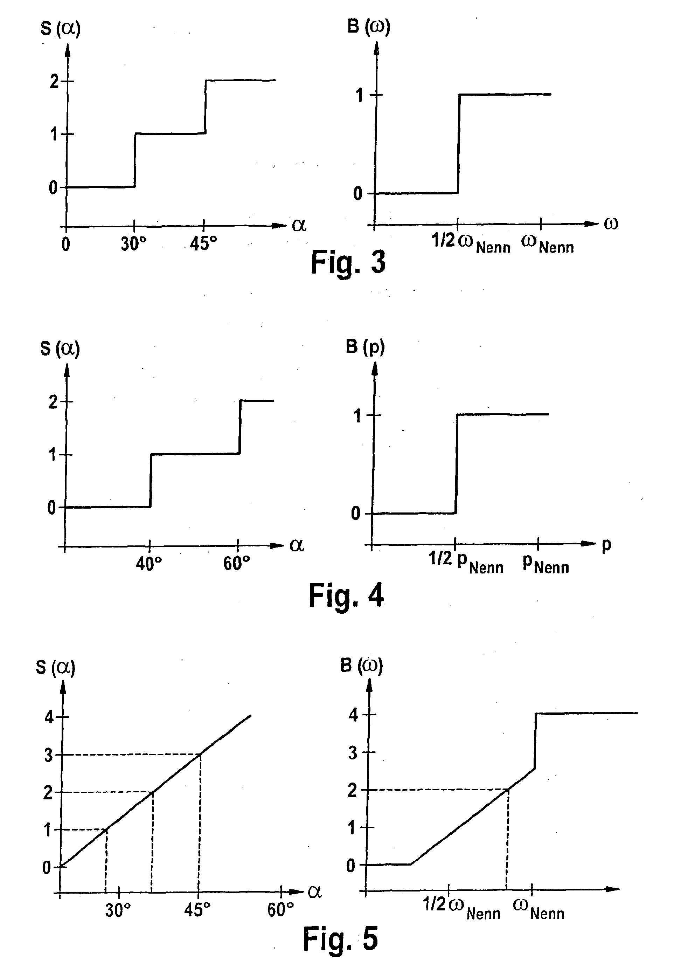

Die Figuren 3 bis 5 zeigen weitere Ausführungsformen des erfindungsgemäßen Verfahrens. In Fig. 3 ist die Auswerteeinheit 20 derart ausgelegt, dass sie dem Schräganströmungswert S(α) bei einem Schräganströmungswinkel α zwischen 0° und 30° den Wert 0, bei einem Schräganströmungswinkel α zwischen 30° und 45° den Wert 1 und bei einem Schräganströmungswinkel α über 45° den Wert 2 zuordnet. In der Auswerteeinheit 23 wird dem Belastungswert B(ω) der Wert 0 zugeordnet, wenn die Rotordrehzahl ω unterhalb der halben Nenndrehzahl ω_{Nenn} liegt, und der Wert 1 zugeordnet, wenn die Rotordrehzahl ω oberhalb der halben Nenndrehzahl ω_{Nenn} liegt. Anstatt der halben Nenndrehzahl ω_{Nenn} haben sich auch Grenzen von 80 % oder 90 % der Nenndrehzahl bewährt. Der Gesamtlastwert G(B,S) berechnet sich als das Produkt aus dem Belastungswert B(w) und dem Schräganströmungswert S(α). Der erste Grenzwert hat den Wert 1, der zweite Grenzwert hat den Wert 2. Die Rotordrehzahl wird reduziert, wenn der Gesamtlastwert G(B,S) größer gleich 1 ist, die Windenergieanlage 10 wird abgeschaltet, wenn der Gesamtlastwert G(B,S) größer gleich 2 ist.

In der Ausführungsform der Fig. 4 wird der Belastungswert B(p) in Abhängigkeit von der Generatorleistung p bestimmt, wobei der Belastungswert B(p) unterhalb der halben Nennleistung p_{Nenn} gleich 0 ist und oberhalb der halben Nennleistung p_{Nenn} gleich 1 ist. Der Schräganströmungswert S(α) hat bei α zwischen 40° und 60° den Wert 1 und bei α größer als 60° den Wert 2. Der erste Grenzwert hat den Wert 1 und der zweite Grenzwert hat den Wert 2. Anstatt der halben Nennleistung haben sich auch Grenzen von 65 % und 80 % der Nennleistung als günstig herausgestellt.

In Fig. 5 besteht ein proportionaler Zusammenhang zwischen dem Schräganströmungswert S(α) und dem Schräganströmungswinkel α. Der Belastungswert B(ω) hat den Wert 0, wenn die Rotordrehzahl w unterhalb der halben Nenndrehzahl ω_{Nenn} liegt. zwischen der halben Nenndrehzahl ω_{Nenn} und der Nenndrehzahl ω_{Nenn} steigt der Belastungswert B(w) proportional mit der Rotordrehzahl ω. Oberhalb der Nenndrehzahl ω_{Nenn} hat der Belastungswert B(w) den Wert 4. Der Gesamtlastwert G(B,S) berechnet sich wiederum als Produkt aus dem Schräganströmungswert S(α) und dem Belastungswert B(ω). Der erste Grenzwert hat den Wert 4, der zweite Grenzwert hat den Wert 6.

Der erste Grenzwert wird beispielsweise dann überschritten, wenn die Windenergieanlage 10 oberhalb der Nenndrehzahl betrieben wird (B(ω)=4) und der Schräganströmungswinkel α knapp unterhalb von 30° liegt (S(α)=1). Ebenfalls überschritten wird der erste Grenzwert, wenn die Windenergieanlage 10 mit 90% der Nenndrehzahl ω_{Nenn} betrieben wird (B(ω)=2) und der Schräganströmungswinkel α bei ungefähr 35° liegt (S(α)=2). Der zweite Grenzwert wird beispielsweise bei 90% der Nenndrehzahl (B(ω)=2) und einem Schräganströmungswinkel α von 45° überschritten (S(α)=3).

Zur Veranschaulichung wurden hier die einfachen Beispiele gewählt, dass der Belastungswert B lediglich von der Rotordrehzahl bzw. der Generatorleistung abhängt. In anderen Ausführungsformen hängt der Belastungswert B von Messwerten ab, die ihrerseits ein Indikator für eine Schräganströmung sein können. Die Messwerte betreffen in diesem Fall beispielsweise Vibrationen in der Windenergieanlage 10, Beanspruchungen von Komponenten der Windenergieanlage 10 oder die Biegung bzw. Beanspruchung der Rotorblätter 14.

In anderen Ausführungsformen wird der Belastungswert aus einer Verknüpfung von mehreren Messwerten ermittelt, z.B. auch in Form von logischen UND- oder ODER-Verknüpfungen mehrerer Grenzwertabfragen oder durch komplexe, mehrere Parameter aufweisende mathematische Funktionen, die die physikalischen Verhältnisse der Gesamtbelastung als Mathematisches Modell widerspiegeln. Die grundsätzlichen mathematischen Modelle für die Gesamtbelastungen sind im Stand der Technik bekannt und z.B. in Form von kommerziellen Simulationsprogrammen veröffentlicht. Bevorzugte Messgrößen sind hier neben den o.g. Messgrößen für die Belastungen insbesondere auch Betriebsparameter wie Leistung, Drehzahl, Drehmoment, Blattwinkel, Pitchaktivität (Aktivität des Blattverstellsystems, erfassbar beispielsweise über die Standardabweichung des Blattwinkels), sowie Umgebungsparameter wie Windgeschwindigkeit, Windrichtung, Turbulenzintensität, Windgradient, Luftdichte, Temperatur. Eine besonders bevorzugte, einfache Ausführungsform einer derartigen Verknüpfung sieht beispielsweise vor, dass die Rotordrehzahl vermindert wird, wenn die Rotordrehzahl größer als 80%, insbesondere 90% der Nenndrehzahl ist und / oder die Leistung mehr als 65%, insbesondere 80% der Nennleistung beträgt sowie zusätzlich ein Schräganströmungsgrenzwert überschritten ist.

## Patentansprüche

1. Verfahren zum Betreiben einer Windenergieanlage (10) bei Nennwindgeschwindigkeit mit den folgenden Schritten:
a. Bestimmen eines Schräganströmungswerts (S), der die Abweichung (α) zwischen der Windrichtung und der Richtung der Rotorachse der Windenergieanlage (10) repräsentiert;
b. Bestimmen eines Belastungswerts (B), der auf der Basis einer Zunahme der Rotordrehzahl bestimmt wird oder der einen durch eine Schräganströmung verursachten Belastungszustand der Windenergieanlage (10) repräsentiert;
c. Berechnen eines Gesamtlastwerts (G) aus dem Belastungswert (B) und dem Schräganströmungswert (S) unter Ausnutzung eines funktionalen Zusammenhangs, gemäß dem sich der Gesamtlastwert (G) in Abhängigkeit von dem Belastungswert (B) und in Abhängigkeit von dem Schräganströmungswert (S) monoton ändert;
d. Vermindern der Rotordrehzahl (ω) der Windenergieanlage, nachdem der Gesamtlastwert (G) einen ersten Grenzwert überschritten hat;
e. Abschalten der Windenergieanlage (10), wenn die Bedingung aus Schritt d. erfüllt ist und ein zweiter von der Gesamtbelastung der Windenergieanlage direkt oder indirekt abhängiger Grenzwert überschritten ist.

2. Verfahren nach Anspruch 1, **dadurch gekennzeichnet, dass** die Windenergieanlage in Schritt e. abgeschaltet wird, nachdem der Gesamtlastwert (G) einen zweiten Grenzwert überschritten hat, wobei der zweite Grenzwert einer größeren Gesamtbelastung der Windenergieanlage entspricht als der erste Grenzwert.

3. Verfahren nach Anspruch 1, **dadurch gekennzeichnet, dass** die Windenergieanlage in Schritt e. abgeschaltet wird, nachdem ein als Folge der Drehzahlverminderung des Schritts d. veränderter Parameter der Windenergieanlage einen vorgegebenen Grenzwert überschritten hat.

4. Verfahren nach einem der Ansprüche 1 bis 3, **dadurch gekennzeichnet, dass** der Belastungswert (B) auf der Basis der Rotordrehzahl (ω) und/oder der Generatorleistung (p) bestimmt wird.

5. Verfahren nach einem der Ansprüche 1 bis 4, **dadurch gekennzeichnet, dass** der Belastungswert (B) auf der Basis eines Messwerts bestimmt wird, der sich ändert, wenn die Windenergieanlage (10) einer Schräganströmung ausgesetzt ist, wobei insbesondere der Messwert eine Beanspruchung einer Komponente der Windenergieanlage (10), weiter insbesondere von Rotorblättern der Windenergieanlage (10), betrifft.

6. Verfahren nach einem der Ansprüche 1 bis 5, **dadurch gekennzeichnet, dass** die Rotorblätter (14) zur Verminderung der Belastung periodisch gepitcht werden, wobei die Periode des Pitchens der Drehzahl (ω) des Rotors (13) entspricht.

7. Verfahren nach einem der Ansprüche 1 bis 6, **dadurch gekennzeichnet, dass** die Windenergieanlage (10) neu ausgerichtet wird, um die Differenz zwischen der Windrichtung und der Richtung der Rotorachse zu vermindern, wenn der Gesamtlastwert (G) oberhalb des zweiten Grenzwerts und/oder des ersten Grenzwerts liegt.

8. Verfahren nach einem der Ansprüche 1 bis 7, **dadurch gekennzeichnet, dass** in Schritt d) die Rotordrehzahl (ω) desto stärker reduziert wird, je stärker der Gesamtlastwert (G) den ersten Grenzwert überschreitet.

9. Verfahren nach einem der Ansprüche 1 bis 8, **dadurch gekennzeichnet, dass** in Schritt d) die Generatorleistung (p) vermindert wird.

10. Verfahren nach einem der Ansprüche 1 bis 9, **dadurch gekennzeichnet, dass** die in Schritt d) vorgenommene Drehzahlverminderung rückgängig gemacht wird, wenn der Gesamtlastwert (G) für eine vorbestimmte Zeitdauer, insbesondere von 20 s, vorzugsweise von 10 s, weiter vorzugsweise von 5 s unterhalb des ersten Grenzwerts liegt.

11. Verfahren zum Betreiben einer Windenergieanlage (10) bei Nennwindgeschwindigkeit mit den folgenden Schritten:
a. Bestimmen eines Schräganströmungswerts (S), der die Abweichung (α) zwischen der Windrichtung und der Richtung der Rotorachse der Windenergieanlage (10) repräsentiert;
b. Bestimmen eines Belastungswerts (B), der auf der Basis einer Zunahme der Rotordrehzahl bestimmt wird oder einen durch eine Schräganströmung verursachten Belastungszustand der Windenergieanlage (10) repräsentiert;
c. Vergleichen des Schräganströmungswerts (S) mit einem ersten vorgegebenen Grenzwert und einem zweiten vorgegebenen Grenzwert;
d. Vergleichen des Belastungswerts (B) mit einem vorgegebenen Wert;
e. Vermindern der Rotordrehzahl (ω) der Windenergieanlage (10), wenn der Belastungswert (B) größer ist als der vorgegebene Wert und wenn der Schräganströmungswert (S) größer ist als der erste vorgegebene Grenzwert;
f. Abschalten der Windenergieanlage (10), wenn der Belastungswert (B) größer ist als der vorgegebene Wert und wenn der Schräganströmungswert (S) größer ist als der zweite vorgegebenen Grenzwert.

12. Verfahren zum Betreiben einer Windenergieanlage (10) bei Nennwindgeschwindigkeit mit den folgenden Schritten:
a. Bestimmen eines ersten und eines zweiten Schräganströmungswerts (S), die die Abweichung (α) zwischen der Windrichtung und der Richtung der Rotorachse der Windenergieanlage (10) repräsentieren;
b. Bestimmen eines Belastungswerts (B), der auf der Basis einer Zunahme der Rotordrehzahl bestimmt wird oder der einen durch eine Schräganströmung verursachten Belastungszustand der Windenergieanlage (10) repräsentiert;
c. Vergleichen des ersten Schräganströmungswerts (S) mit einem ersten vorgegebenen Grenzwert und Vergleichen des zweiten Schräganströmungswerts (S) mit einem zweiten vorgegebenen Grenzwert;
d. Vergleichen des Belastungswerts (B) mit einem vorgegebenen Wert;
e. Vermindern der Rotordrehzahl (ω) der Windenergieanlage (10), wenn der Belastungswert (B) größer ist als der vorgegebene Wert und wenn der erste Schräganströmungswert (S) größer ist als der erste vorgegebene Grenzwert;
f. Abschalten der Windenergieanlage (10), wenn der Belastungswert (B) größer ist als der vorgegebene Wert und wenn der zweite Schräganströmungswert (S) größer ist als der zweite vorgegebene Grenzwert.

13. Anordnung aus einer Windenergieanlage (10) und einem Windrichtungsmesser (15, 17), wobei die Windenergieanlage (10) einen Belastungssensor (21, 22) aufweist, umfassend:
a. eine erste Auswerteeinheit (20) zum Ermitteln eines die Abweichung zwischen der Windrichtung und der Richtung der Rotorachse der Windenergieanlage (10) repräsentierenden Schräganströmungswerts aus Messwerten des Windrichtungsmessers (15, 17), wobei der Schräganströmungswert (S) im Bereich der Nennwindgeschwindigkeit ermittelt wird;
b. eine zweite Auswerteeinheit (23) zum Ermitteln eines den Belastungszustand der Windenergieanlage (10) bei Nennwindgeschwindigkeit repräsentierenden Belastungswerts (B) aus Messwerten des Belastungssensors (21, 22), wobei der Belastungswert (B) auf der Basis einer Zunahme der Rotordrehzahl bestimmt wird oder wobei der Belastungswert (B) einen durch eine Schräganströmung verursachten Belastungszustand der Windenergieanlage (10) repräsentiert;
c. ein Rechenmodul (24) zum Berechnen eines Gesamtlastwerts (G) aus dem Belastungswert (B) und dem Schräganströmungswert (S), wobei das Rechenmodul (24) einen funktionellen Zusammenhang ausnutzt, gemäß dem sich der Gesamtlastwert (G) in Abhängigkeit von dem Belastungswert (B) und in Abhängigkeit von dem Schräganströmungswert (S) monoton ändert;
d. eine Steuereinheit (25), die die Rotordrehzahl (ω) der Windenergieanlage (10) vermindert, wenn der Gesamtlastwert (G) oberhalb eines ersten Grenzwerts liegt, und die die Windenergieanlage (10) abschaltet, wenn zusätzlich ein zweiter direkt oder indirekt von der Gesamtbelastung abhängiger Grenzwert überschritten ist.

14. Anordnung nach Anspruch 14, **dadurch gekennzeichnet, dass** sie eine Mehrzahl von Windrichtungsmessern (15, 17) umfasst und dass die erste Auswerteeinheit (20) zwischen den Messwerten der Mehrzahl von Windrichtungsmessern (15, 17) mittelt.

15. Anordnung nach Anspruch 15 oder 16, **dadurch gekennzeichnet, dass** als Belastungssensor (21, 22) ein Sensor für die Rotordrehzahl, für die Generatorleistung und/oder für die Belastung, Beanspruchung oder Verformung von Turm, Rotorwelle, Rotorblatt (14) oder einer sonstigen Komponente der Windenergieanlage (10) vorgesehen ist.

## Claims

1. Method for operation of a wind energy installation (10) at the rated wind speed, having the following steps:
a. determination of an oblique incident flow value (S), which represents the difference (α) between the wind direction and the direction of the rotor axis of the wind energy installation (10) ;
b. determination of a load value (B) which is determined on the basis of an increase in the rotor rotation speed or which represents a load state of the wind energy installation (10) caused by an oblique incident flow;
c. calculation of a total load value (G) from the load value (B) and the oblique incident flow value (S) using a functional relationship according to which the total load value (G) varies monotonally as a function of the load value (B) and as a function of the oblique incident flow value (S);
d. reduction of the rotor rotation speed (ω) of the wind energy installation after the total load value (G) has exceeded a first limit value;
e. shutting down of the wind energy installation (10) when the condition from step d. is satisfied and a second limit value is exceeded which is directly or indirectly dependent on the total load of the wind energy installation.

2. Method according to Claim 1, **characterized in that** the wind energy installation is shut down in step e. after the total load value (G) has exceeded a second limit value, with the second limit value corresponding to a greater total load on the wind energy installation than the first limit value.

3. Method according to Claim 1, **characterized in that** the wind energy installation is shut down in step e. after a parameter, which is varied as a consequence of the rotation-speed reduction in step d., of the wind energy installation has exceeded a predetermined limit value.

4. Method according to one of Claims 1 to 3, **characterized in that** the load value (B) is determined on the basis of the rotor rotation speed (ω) and/or the generator power (p).

5. Method according to one of Claims 1 to 4, **characterized in that** the load value (B) is determined on the basis of a measured value which changes when the wind energy installation (10) is subject to an oblique incident flow, wherein in particular the measured value relates to a load on a component of the wind energy installation (10), further in particular on rotor blades of the wind energy installation (10).

6. Method according to one of Claims 1 to 5, **characterized in that** the rotor blades (14) are periodically pitched in order to reduce the load, with the period of the pitching corresponding to the rotation speed (ω) of the rotor (13).

7. Method according to one of Claims 1 to 6, **characterized in that** the wind energy installation (10) is realigned in order to reduce the difference between the wind direction and the direction of the rotor axis when the total load value (G) is above the second limit value and/or the first limit value.

8. Method according to one of Claims 1 to 7, **characterized in that**, in step d), the rotor rotation speed (ω) is reduced to a greater extent the greater the extent to which the total load value (G) exceeds the first limit value.

9. Method according to one of Claims 1 to 8, **characterized in that** the generator power (p) is reduced in step d).

10. Method according to one of Claims 1 to 9, **characterized in that** the rotation-speed reduction which is carried out in step d) is reversed when the total load value (G) is below the first limit value for a predetermined time period, in particular of 20 s, preferably of 10 s, and furthermore preferably of 5 s.

11. Method for operation of a wind energy installation (10) at the rated wind speed having the following steps:
a. determination of an oblique incident flow value (S), which represents the difference (α) between the wind direction and the direction of the rotor axis of the wind energy installation (10) ;
b. determination of a load value (B) which is determined on the basis of an increase in the rotor rotation speed or represents a load state of the wind energy installation (10) caused by an oblique incident flow;
c. comparison of the oblique incident flow value (S) with a first predetermined limit value and a second predetermined limit value;
d. comparison of the load value (B) with a predetermined value;
e. reduction of the rotor rotation speed (ω) of the wind energy installation (10) when the load value (B) is greater than the predetermined value and when the oblique incident flow value (S) is greater than the first predetermined limit value;
f. shutting down of the wind energy installation (10) when the load value (B) is greater than the predetermined value and when the oblique incident flow value (S) is greater than the second predetermined limit value.

12. Method for operation of a wind energy installation (10) at the rated wind speed having the following steps:
a. determination of a first and second oblique incident flow value (S) which represents the difference (α) between the wind direction and the direction of the rotor axis of the wind energy installation (10);
b. determination of a load value (B) which is determined on the basis of an increase in the rotor rotation speed or which represents a load state of the wind energy installation (10)caused by an oblique incident flow;
c. comparison of the first oblique incident flow value (S) with a first predetermined limit value and comparison of the second oblique incident flow value (S) with a second predetermined limit value;
d. comparison of the load value (B) with a predetermined value;
e. reduction of the rotor rotation speed (ω) of the wind energy installation (10) when the load value (B) is greater than the predetermined value and when the first oblique incident flow value (S) is greater than the first predetermined limit value;
f. shutting down of the wind energy installation (10) when the load value (B) is greater than the predetermined value and when the second oblique incident flow value (S) is greater than the second predetermined limit value.

13. Arrangement comprising a wind energy installation (10) and a wind direction gauge (15, 17), with the wind energy installation (10) having a load sensor (21, 22), comprising:
a. a first evaluation unit (20) for determination of an oblique incident flow value, which represents the difference between the wind direction and the direction of the rotor axis of the wind energy installation (10), from measured values of the wind direction gauge (15, 17), wherein the oblique incident flow value (S) is determined in the region of the rated wind speed;
b. a second evaluation unit (23) for determination of a load value (B), which represents the load state of the wind energy installation (10) at the rated wind speed, from measured values of the load sensor (21, 22) wherein the load value (B) is determined on the basis of an increase in the rotor rotation speed or wherein the load value (B) represents a load state of the wind energy installation (10) caused by an oblique incident flow;
c. a computation module (24) for calculation of a total load value (G) from the load value (B) and the oblique incident flow value (S), with the computation module (24) using a functional relationship according to which the total load value (G) varies monotonally as a function of the load value (B) and as a function of the oblique incident flow value (S).
d. a control unit (25), which reduces the rotor rotation speed (ω) of the wind energy installation (10) when the total load value (G) is above a first limit value, and which shuts down the wind energy installation (10) when, in addition, a second limit value, which is directly or indirectly dependent on the total load, is exceeded.

14. Arrangement according to Claim 14, **characterized in that** the arrangement comprises a plurality of wind direction gauges (15, 17), and **in that** the first evaluation unit (20) forms an average between the measured values of the plurality of wind direction gauges (15, 17).

15. Arrangement according to Claim 15 or 16, **characterized in that** a sensor for the rotor rotation speed, for the generator power and/or for the load, stress or deformation of the tower, rotor shaft, rotor blade (14) or some other component of the wind energy installation (10) is provided as the load sensor (21, 22).

## Revendications

1. Procédé d'exploitation d'un éolienne (10) à vitesse nominale, avec les étapes suivantes :
a. détermination d'une valeur de soufflage oblique (S) qui représente l'écart (α) entre la direction du vent et la direction de l'axe du rotor de l'éolienne (10) ;
b. détermination d'une valeur de sollicitation (B) qui est déterminée sur la base d'une augmentation de la vitesse de rotation du rotor ou qui représente un état de sollicitation de l'éolienne (10) provoqué par un soufflage oblique ;
c. calcul d'une valeur totale de charge (G) à partir de la valeur de sollicitation (B) et de la valeur de soufflage oblique (S) en utilisant une relation fonctionnelle, selon laquelle la valeur totale de charge (G) change de façon monotone en fonction de la valeur de sollicitation (B) et en fonction de la valeur de soufflage oblique (S) ;
d. réduction de la vitesse de rotation du rotor (ω) de l'éolienne lorsque la valeur de charge totale (G) a dépassé une première valeur limite ;
e. arrêt de l'éolienne (10) lorsque la condition de l'étape d. est remplie et lorsqu'une une deuxième valeur limite, qui dépend directement ou indirectement de la sollicitation totale de l'éolienne, est dépassée.

2. Procédé selon la revendication 1, **caractérisé en ce que** l'éolienne est arrêtée à l'étape e. lorsque la valeur totale de charge (G) a dépassé une deuxième valeur limite, la deuxième valeur limite correspondant à une sollicitation totale de l'éolienne supérieure à la première valeur limite.

3. Procédé selon la revendication 1, **caractérisé en ce que** l'éolienne est arrêtée à l'étape e. lorsqu'un paramètre de l'éolienne, modifié à la suite de la réduction de la vitesse de rotation de l'étape d., a dépassé une valeur limite prédéterminée.

4. Procédé selon l'une des revendications 1 à 3, **caractérisé en ce que** la valeur de sollicitation (B) est déterminée sur la base de la vitesse de rotation du rotor (ω) et/ou de la puissance du générateur (p).

5. Procédé selon l'une des revendications 1 à 4, **caractérisé en ce que** la valeur de sollicitation (B) est déterminée sur la base d'une valeur de mesure qui change lorsque l'éolienne (10) est soumise à un soufflage oblique, la valeur de mesure concernant plus particulièrement une sollicitation d'un composant de l'éolienne (10), plus particulièrement de pales du rotor de l'éolienne (10).

6. Procédé selon l'une des revendications 1 à 5, **caractérisé en ce que** les pales du rotor (14) présentent un pas périodique pour la réduction de la sollicitation, la période du pas correspondant à la vitesse de rotation (ω) du rotor (13).

7. Procédé selon l'une des revendications 1 à 6, **caractérisé en ce que** l'éolienne (10) est réalignée afin de réduire la différence entre la direction du vent et la direction de l'axe du rotor lorsque la valeur de charge totale (G) se trouve au-dessus de la deuxième valeur limite et/ou de la première valeur limite.

8. Procédé selon l'une des revendications 1 à 7, **caractérisé en ce que**, à l'étape d), la vitesse de rotation du rotor (ω) est réduite d'autant plus que la valeur de charge totale (G) dépasse fortement la première valeur limite.

9. Procédé selon l'une des revendications 1 à 8, **caractérisé en ce que**, à l'étape d), la puissance du générateur (p) est réduite.

10. Procédé selon l'une des revendications 1 à 9, **caractérisé en ce que** la réduction de vitesse de rotation effectuée à l'étape d) est annulée lorsque la valeur de charge totale (G) se trouve, pendant un temps prédéterminé, plus particulièrement de 20 s, de préférence de 10 s, de préférence de 5 s, en dessous de la première valeur limite.

11. Procédé d'exploitation d'une éolienne (10) à vitesse nominale, avec les étapes suivantes :
a. détermination d'une valeur de soufflage oblique (S) qui représente l'écart (α) entre la direction du vent et la direction de l'axe du rotor de l'éolienne (10) ;
b. détermination d'une valeur de sollicitation (B) qui est déterminée sur la base d'une augmentation de la vitesse de rotation du rotor ou qui représente un état de sollicitation de l'éolienne (10) provoqué par un soufflage oblique ;
c. comparaison de la valeur de soufflage oblique (S) avec une première valeur limite prédéterminée et une deuxième valeur limite prédéterminée ;
d. comparaison de la valeur de sollicitation (B) avec une valeur prédéterminée ;
e. réduction de la vitesse de rotation du rotor (ω) de l'éolienne (10) lorsque la valeur de sollicitation (B) est supérieure à la valeur prédéterminée et lorsque la valeur de soufflage oblique (S) est supérieure à la première valeur limite prédéterminée ;
f. arrêt de l'éolienne (10) lorsque la valeur de sollicitation (B) est supérieure à la valeur prédéterminée et lorsque la valeur de soufflage oblique (S) est supérieure à la deuxième valeur limite prédéterminée.

12. Procédé d'exploitation d'une éolienne (10) à vitesse nominale avec les étapes suivantes :
a. détermination d'une première et d'une deuxième valeur de soufflage oblique (S), qui représentent l'écart (α) entre la direction du vent et la direction de l'axe du rotor de l'éolienne (10) ;
b. détermination d'une valeur de sollicitation (B) qui est déterminée sur la base d'une augmentation de la vitesse de rotation du rotor ou qui représente un état de sollicitation de l'éolienne (10) provoqué par un soufflage oblique ;
c. comparaison de la première valeur de soufflage oblique (S) avec une première valeur limite prédéterminée et comparaison de la deuxième valeur de soufflage oblique (S) avec une deuxième valeur limite prédéterminée ;
d. comparaison de la valeur de sollicitation (B) avec une valeur prédéterminée ;
e. réduction de la vitesse de rotation du rotor (ω) de l'éolienne (10) lorsque la valeur de sollicitation (B) est supérieure à la valeur prédéterminée et lorsque la première valeur de soufflage oblique (S) est supérieure à la première valeur limite prédéterminée ;
f. arrêt de l'éolienne (10) lorsque la valeur de sollicitation (B) est supérieure à la valeur prédéterminée et lorsque la deuxième valeur de soufflage oblique (S) est supérieure à la deuxième valeur limite prédéterminée.

13. Dispositif constitué d'une éolienne (10) et d'un capteur de direction de vent (15, 17), l'éolienne (10) comprenant un capteur de sollicitation (21, 22), comprenant :
a. une première unité d'analyse (20) pour la détermination d'une valeur de soufflage oblique représentant l'écart entre la direction du vent et la direction de l'axe du rotor de l'éolienne (10) de l'axe du rotor de l'éolienne (10), à partir de valeurs de mesure du capteur de direction du vent (15, 17), la valeur de soufflage oblique (S) étant déterminée au niveau de la vitesse nominale ;
b. une deuxième unité d'analyse (23) pour la détermination d'une valeur de sollicitation (B) représentant l'état de sollicitation de l'éolienne (10) à vitesse nominale, à partir de valeurs de mesure du capteur de sollicitation (21, 22), la valeur de sollicitation (B) étant déterminée sur la base d'une augmentation de la vitesse de rotation du rotor ou la valeur de sollicitation (B) représentant un état de sollicitation de l'éolienne (10) provoqué par un soufflage oblique ;
c. un module de calcul (24) pour le calcul d'une valeur de charge totale (G) à partir de la valeur de sollicitation (B) et de la valeur de soufflage oblique (S), le module de calcul (24) utilisant une relation fonctionnelle selon laquelle la valeur de charge totale (G) change de façon monotone en fonction de la valeur de sollicitation (B) et en fonction de la valeur de soufflage oblique (S) ;
d. une unité de commande (25) qui réduit la vitesse de rotation du rotor () de l'éolienne (10) lorsque la valeur de charge totale (G) se trouve au-dessus d'une première valeur limite et qui arrêt l'éolienne (10) lorsque, en outre, une deuxième valeur limite dépendant directement ou indirectement de la sollicitation totale est dépassée.

14. Dispositif selon la revendication 14, **caractérisé en ce qu'**il comprend une pluralité de capteurs de direction de vent (15, 17) et **en ce que** la première unité d'analyse (20) fait la moyenne entre les valeurs de mesure de la pluralité des capteurs de direction de vent (15, 17).

15. Dispositif selon la revendication 15 ou 16, **caractérisé en ce que** le capteur de sollicitation (21, 22) est un capteur pour la vitesse de rotation du rotor, pour la puissance du générateur et/ou pour la charge, la c=sollicitation ou la déformation d'une tour, d'un arbre de rotor, d'une pale de rotor (14) ou d'un autre composant de l'éolienne (10).
